# FASCICULE DE BREVET EUROPEEN

(11) **EP 2 666 580 B1**
(45) Date de publication et mention de la délivrance du brevet: **29.07.2020**
(21) Numéro de dépôt: 12169069.7
(22) Date de dépôt: 23.05.2012
(51) Int. Cl.: B23K 35/02, B23K 35/30, B23K 35/36, B23K 35/40

(54) **Fil de soudage à âme centrale solide et son procédé de fabrication**
Schweißdraht mit festem zentralen Drahtkern, und sein Herstellungverfahren
Solid-core welding wire and method for manufacturing same

(43) Date de publication de la demande: 27.11.2013
(73) Titulaire: Lincoln Electric Italia S.r.l., 16010 Serra Ricco (Genoa GE) (IT)
(72) Inventeur: Scappin, Michele, 31003 Castelfranco Veneto (IT)
(74) Mandataire: Knauer, Joachim

(56) Documents cités:
- EP-A1- 0 015 746
- EP-A1- 1 277 538
- JP-A- 58 205 697
- US-A- 1 374 711
- US-A- 1 525 840
- US-A- 3 235 405
- Paul L. Rossiter: "The electrical resistivity of metals and alloys" In: "The electrical resistivity of metals and alloys", 1 January 1987 (1987-01-01), Cambridge University Press, Cambridge, XP00000001, ISBN: 978-0-511-60028-9 * the whole document *

## Description

La présente invention porte sur un fil de soudage à âme métallique solide se présentant sous forme d'un fil métallique, tel un fil d'acier, entouré d'une couche intermédiaire contenant un ou plusieurs composés, tels des silicates, du rutile..., et d'une enveloppe externe en métal, notamment en acier, ainsi que sur un procédé de fabrication d'un tel fil et son utilisation en soudage à l'arc électrique, en particulier en soudage MIG/MAG ou à l'arc submergé.

Certains procédés de soudage, en particulier de soudage à l'arc électrique, par exemple en soudage MIG/MAG ou en soudage à l'arc submergé, requièrent l'utilisation d'un (ou plusieurs) fil de soudage qui est progressivement fondu par un (ou plusieurs) arc électrique de manière à obtenir un bain de soudure qui, en se refroidissant, forme un joint de soudure entre les pièces à souder.

Les fils de soudage à l'arc existant sont de deux types principaux, à savoir les fils pleins et les fils fourrés. Un fil plein est formé d'un fil métallique solide, par exemple un fil d'acier au carbone ou d'acier inoxydable, alors qu'un fil fourré est formé d'une enveloppe tubulaire externe, encore appelée « feuillard », qui renferme un flux interne formé de matériaux granulaires ou pulvérulentes, telles des poudres formées d'éléments minéraux, tel que TiO2 , CaF2 ...

Les fils pleins et les fils fourrés présentent toutefois des inconvénients, tels que notamment des vitesses de soudage parfois insuffisantes ou limitées, un taux de dépôt trop faible, une soudabilité moyenne ou médiocre, un besoin en énergie trop important pouvant engendrer des déformations des pièces à souder et, pour ce qui concerne en particulier les fils pleins, l'impossibilité d'appliquer des micro alliages pour améliorer l'ionisation d'arc et les propriétés mécaniques du dépôt. JP 58 205697 A et US 1 525 840 A divulguent un fil de soudage comprenant une âme centrale formée d'un fil métallique solide, une enveloppe métallique tubulaire externe formant manchon autour dudit fil métallique solide et une couche intermédiaire compris entre l'âme centrale et l'enveloppe métallique tubulaire externe contenant un ou plusieurs composés, la résistivité de la couche intermédiaire doit être comprise entre 5x10⁻⁶ et 5x10⁻⁸ Ωm.

Le problème qui se pose est de proposer un fil de soudage amélioré qui permette de réduire l'énergie nécessaire donc éviter les déformations des pièces, d'améliorer la soudabilité et la vitesse de soudage et le taux de dépôt et d'obtenir une bonne ionisation d'arc, utilisable en soudage à l'arc électrique, en particulier de type MIG ou MAG, ou à l'arc submergé.

La solution de l'invention est un fil de soudage, pouvant être appelé « fil à âme solide », comprenant une âme centrale formée d'un fil métallique solide, une enveloppe métallique tubulaire externe formant manchon autour dudit fil métallique solide et une couche intermédiaire comprise entre l'âme centrale et l'enveloppe métallique tubulaire externe, contenant un ou plusieurs composés. La solution de l'invention est un fil de soudage selon la revendication 1 et une procédé de fabrication du fil de soudage selon la revendication 7.

En d'autres termes, le fil de soudage de l'invention comporte une âme ou un « coeur » central constitué d'un fil métallique solide, lequel est entouré d'une couche intermédiaire, et l'ensemble ainsi obtenu est lui-même entouré par l'enveloppe externe qui vient former un manchon autour de la couche intermédiaire et dudit fil métallique formant âme centrale, i.e. la couche intermédiaire est donc prise « en sandwich » entre le fil solide interne formant âme centrale et l'enveloppe externe.

Selon le cas, le fil de soudage à âme solide de l'invention peut comprendre l'une ou plusieurs des caractéristiques techniques suivantes :
- la couche intermédiaire est isolante électriquement, c'est-à-dire qu'elle contient un ou plusieurs éléments ou composés électriquement isolants et/ou présentant une résistivité électrique élevée ; la résistivité électrique étant sa capacité à s'opposer à la circulation du courant électrique.
- l'enveloppe métallique tubulaire externe est en acier.
- le fil métallique solide formant âme centrale est en acier.
- le fil métallique interne solide formant âme centrale et l'enveloppe métallique tubulaire externe sont en acier au carbone, en acier faiblement allié (< 5 % d'éléments d'alliage) ou en acier inoxydable.
- la couche intermédiaire contient un ou plusieurs composés choisis parmi les silicates ou les sels de Na, K, Zr et Li, le rutile (TiO2), le Téflon™, CaF2, les sels de fluor, le quartz, MoS2 , WS2 , le mica, le graphite, les carbonates ou oxydes métalliques de Bi, Zr, Fe et Al, les métaux et les alliages de B, Ti, Sn, Mn, Ni, Cr et Mo, et les alliages de silicium.
- la couche intermédiaire contient un ou plusieurs composés permettant de modifier l'ionisation d'arc, en particulier des composés à base de K, Na ou Li
- la couche intermédiaire contient un ou plusieurs composés permettant de modifier la métallurgie du dépôt choisis parmi les composés à base de Ti, B, N, Na, Mg, Si....
- la couche intermédiaire interne représente de 0,0001 à 20 % environ de la surface de la section du fil, de préférence entre 1 et 8% environ, et l'enveloppe métallique tubulaire externe représente le reste de la surface de la section du fil, soit de 5 à 45% environ de la section du fil, typiquement de 10 à 20% environ.
-
- il a un diamètre externe inférieur ou égal à 10 mm environ, de préférence compris entre environ 0,8 et 5 mm.
- l'enveloppe métallique tubulaire externe présente un traitement chimique superficiel de type cuivrage ou bronzage.
- il a une longueur de plusieurs dizaines, voire centaines de mètres de longueur.
- il est enroulé en bobine de fil et/ou conditionné dans un fût de fil de soudage.
- la couche intermédiaire à une épaisseur inférieure à 1,5 mm.

L'invention concerne en outre un procédé de fabrication d'un fil de soudage selon l'invention, comportant les étapes de :
- a) appliquer ou déposer au moins une couche intermédiaire sur la surface externe d'un fil métallique de manière à obtenir un fil métallique revêtu d'une couche d'un ou plusieurs composés formant une couche intermédiaire sur la surface externe dudit fil métallique,
- b) introduire le fil métallique recouvert de la couche intermédiaire obtenu à l'étape a) dans une gouttière constituée d'une bande métallique de section en « U » ayant deux bords longitudinaux parallèles rapprochés l'un de l'autre, et
- c) rapprocher lesdits bords longitudinaux la gouttière de section en « U » remplie par le fil métallique recouvert de la couche intermédiaire obtenue à l'étape b), jusqu'au contact ou quasi-contact l'un de l'autre de manière à obtenir un pré-fil de section en « O ».

Selon le cas, le procédé de fabrication d'un fil de soudage de l'invention peut comprendre l'une ou plusieurs des caractéristiques techniques suivantes :
- il comporte une étape d), subséquente à l'étape c), souder l'une à l'autre les bords longitudinaux du pré-fil de section en « O », de préférence par soudage à haute fréquence, faisceau laser ou TIG. Cette étape permet de rendre le fil étanche en réalisant un joint de soudage hermétique entre les deux bords longitudinaux pré-fil de section en « O ».
- il comporte une étape e), subséquente à l'étape c) ou à l'étape d), de réduction du diamètre du diamètre du pré-fil de section en « O » pour obtenir un fil de soudage de diamètre final inférieur à 10 mm, typiquement un diamètre final compris entre 0,8 et 5 mm.
- à l'étape a), la couche intermédiaire est déposée sur la surface externe d'un fil métallique par immersion du fil métallique dans la ou les composés à appliquer, par nébulisation ou par extrusion ou par toute autre technique adéquate. Le choix de la technique à utiliser se fait notamment en fonction de la nature du ou des composés à déposer sur l'âme centrale métallique, c'est-à-dire sur la surface du fil métallique interne.
- après dépôt de la couche intermédiaire, il peut être opéré un séchage de cette couche intermédiaire, soit en ligne, soit hors ligne, pour éliminer l'eau ou tout autre liquide éventuellement présent dans cette couche, par exemple tout liquide ayant servi au dépôt de ladite couche intermédiaire en jouant un rôle de « transporteur » du ou des composés à déposer sur l'âme centrale métallique.
- les conformations en « U » et en « O » de la bande métallique se font au moyen de galets presseurs ou analogues.
- on applique en outre sur l'enveloppe métallique tubulaire externe du fil, un traitement chimique superficiel de type cuivrage ou bronzage.
- préalablement à l'étape a), le fil métallique est débarrassé de tout polluant pouvant se trouver sur sa surface externe, en particulier il subit un décalaminage avec pliage mécanique, passage au papier de verre ou au corindon, ou/et il est nettoyé avec décapage chimique et/ou salaison.
- le fil métallique solide formant l'âme centrale est en acier et/ou l'enveloppe métallique tubulaire externe est en acier, notamment en acier au carbone, en acier faiblement allié (< 5 % d'éléments d'alliage) ou en acier inoxydable.
- à l'étape a), la couche intermédiaire déposée sur la surface du fil métallique constituant l'âme centrale, contient un ou plusieurs composés ou composés choisis parmi les silicates ou les sels de Na, K, Zr et Li, le rutile (TiO2), le Téflon™, CaF2 , les sels de fluor, le quartz, MoS2 , WS2 , le mica, le graphite, les carbonates ou oxydes métalliques de Bi, Zr, Fe et Al, les métaux et les alliages de B, Ti, Sn, Mn, Ni, Cr et Mo, et les alliages de silicium.
- les étapes a) à c) sont opérées en continu, de préférence sur une chaîne de fabrication continue sur laquelle le fil est entraîné en translation au moyen de galets motorisés ou analogues par exemple à une vitesse d'au moins 10 m/min.

L'invention va maintenant être mieux comprise grâce à la description suivante faite en références aux Figures annexées parmi lesquelles :
- la Figure 1 est un schéma de la section d'un fil de soudage à âme solide selon l'invention ;
- la Figure 2 schématise un procédé de fabrication d'un fil de soudage à âme solide selon l'invention ; et
- la Figure 3 illustre une installation de soudage MIG/MAG mettant en oeuvre un fil de soudage à âme solide selon l'invention

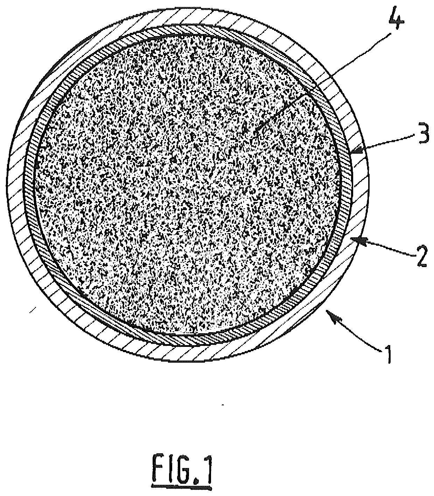

La Figure 1 représente une vue de la section d'un fil de soudage 1 à âme solide 4 selon l'invention destiné en particulier au soudage à l'arc électrique sous gaz MIG/MAG ou à l'arc submergé.

Le fil de soudage 1 de l'invention comprend une âme centrale interne formée d'un fil métallique solide 4, c'est-à-dire un fil plein, entouré d'au moins une couche intermédiaire 3, ladite couche 3 étant elle-même entouré d'une enveloppe métallique externe 2 formant manchon autour de ladite couche 3 et du fil plein central 4.

En tant que fil plein central formant l'âme centrale 4, on utilise préférentiellement un fil métallique dont la surface externe a été nettoyée pour en éliminer notamment la calamine ou tout autre polluant susceptible de s'y trouver, telle de la graisse, par exemple un fil d'acier, notamment d'acier au carbone, d'acier faiblement allié (i.e. < 5% en poids d'éléments d'alliage) ou d'acier inoxydable.

La couche 3 contient un ou plusieurs éléments ou composés électriquement isolants et/ou présentant une résistivité élevée, c'est-à-dire d'au moins 5×10-6 Ωm et dans tous les cas, supérieure à celle de l'enveloppe métallique externe 2.

Ainsi, la couche intermédiaire 3 qui est prise en «sandwich » entre l'enveloppe 2 externe et le fil interne 4 peut être composée de divers éléments ou composés, en particulier un ou plusieurs composés choisis par un ou des éléments suivants: silicates ou sels de Na, K, Zr et Li, rutile (TiO2), Téflon™, CaF2, sels de fluor, quartz, MoS2 , WS2 , mica, graphite, carbonates ou oxydes métalliques de Bi, Zr, Fe et Al, métaux et alliages de B, Ti, Sn, Mn, Ni, Cr et Mo, et les alliages de silicium.

Par ailleurs, l'enveloppe périphérique externe 2 ou « feuillard » est constituée en général d'acier, notamment d'acier au carbone, d'acier faiblement allié (i.e. < 5% en poids d'éléments d'alliage) ou d'acier inoxydable.

Comme illustré en Figure 1 , lorsqu'on considère la section (vue en coupe transversale) d'un fil 1 selon la présente invention, on remarque que la surface de la section de fil est majoritairement formée par l'âme centrale 4, c'est-à-dire le fil métallique interne, soit entre 70 et 90% environ de ladite section.

Par ailleurs, l'enveloppe ou feuillard externe 2 qui forme la paroi extérieure du fil de soudage 1 selon l'invention et qui englobe, d'une part, le fil métallique formant âme centrale 4 et, d'autre part, la couche intermédiaire 3, représente de 5 à 45% environ de la section du fil. Cette enveloppe 2 externe permet d'assurer le contact électrique et le passage du courant de soudage servant à fondre le fil 1 pendant une opération de soudage.

L'enveloppe externe 2 peut être formée d'une feuille métallique mise en forme de tube, puis soit soudée sur toute sa longueur de manière à obtenir un tube étanche, soit dont les deux bords longitudinaux sont simplement mis en contact l'un avec l'autre et ainsi obtenir un tube non étanche.

Comme illustré en Figure 1 , la surface occupée par la couche intermédiaire 3 représente de 0,0001 à 20 % de la surface de la section du fil de l'invention 1.

De préférence, la couche intermédiaire 3 forme une couche isolante ou avec une résistivité élevée, c'est-à-dire typiquement entre 5×10-6 et 5×10+18 Ωm en fonction de l'épaisseur de la couche isolante.

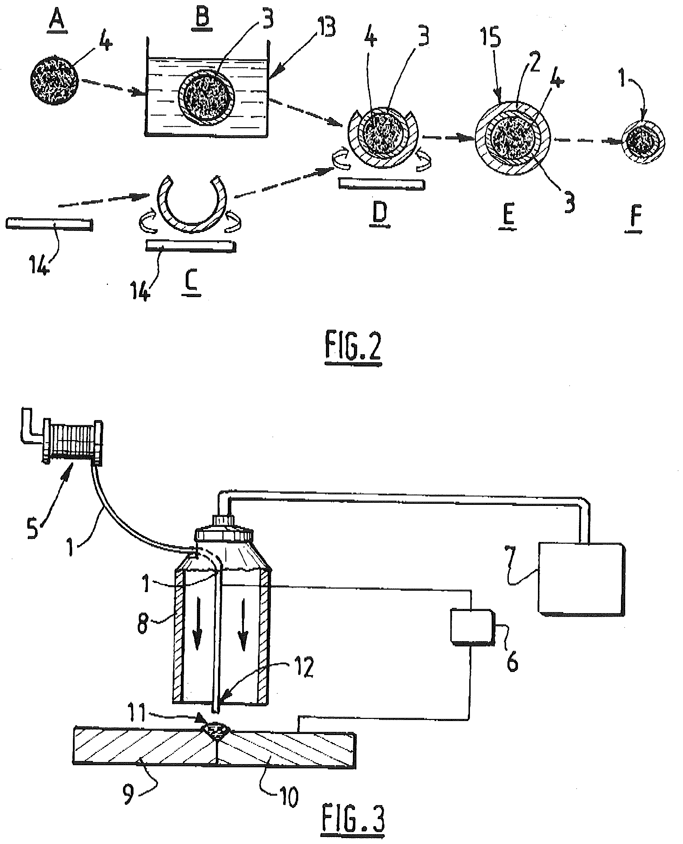

La figure 3 est une vue schématique générale d'une installation de soudage MIG/MAG sous flux gazeux de protection utilisable pour réaliser un joint de soudage 11 entre deux pièces à souder au moyen d'un fil de soudage 1 conforme à la présente invention.

Cette installation de soudage MIG/MAG comporte une bobine 5 de fil de soudage 1 selon l'invention relié à une source de courant 6, c'est-à-dire un générateur de courant de soudage, pour établir un arc électrique entre une extrémité libre 12 du fil 1 et les pièces à souder 9 et 10 de manière à fondre progressivement l'extrémité libre du fil 1 et à obtenir un bain de soudure qui se solidifie en refroidissant en donnant un joint de soudure 11 entre les pièces 9, 10 à assembler.

Il est à noter que les pièces 9, 10 à assembler peuvent être soit deux pièces indépendantes l'une de l'autre, soit deux parties d'une même pièce devant être soudées l'une à l'autre, par exemple les bords longitudinaux d'un tube.

Le fil 1 traverse la buse 8 d'une torche de soudage MIG/MAG, dans laquelle circule par ailleurs un gaz de protection inerte en soudage MIG, par exemple de l'azote, de l'argon, de l'hélium ou un mélange de plusieurs de ces gaz, ou alors un gaz de protection oxydant en soudage MAG, comprenant de l'oxygène, du CO2 ou les deux, par exemple un mélange argon/CO2 ou argon/O2.

Le gaz provient d'une source de gaz externe 7, par exemple une ou plusieurs, bouteilles de gaz, un stockage de gaz sous forme liquide ou gazeuse, une ou plusieurs canalisations de gaz.

Ce gaz de protection permet de créer une atmosphère gazeuse protectrice au niveau de l'extrémité 12 du fil 1 et surtout du bain de soudure destiné à former le joint 11, permettant d'éviter ou minimiser la contamination du bain de soudure par des impuretés contenues dans l'atmosphère ambiante, telle la vapeur d'eau par exemple.

Les paramètres de soudage, c'est-à-dire l'intensité et la tension du courant de soudage, l'énergie de soudage, la vitesse de soudage, la vitesse du fil..., sont fixés au cas par cas et de manière classique par l'opérateur en fonction des conditions opératoires entrant en jeu, à savoir type de soudage à réaliser, nature du matériau à souder, position de soudage, type de configuration de joint.

La Figure 2 illustre les principales étapes de la fabrication d'un fil de soudage 1 selon la présente invention, à savoir :
- une étape A de décalaminage et de nettoyage d'un fil d'acier 4 destiné à constituer l'âme centrale du fil 1 de soudage de l'invention de manière à rendre sa surface très propre,
- une étape B d'application de la couche intermédiaire 3 par exemple par immersion dans un récipient 13 contenant la ou les composés à appliquer destinés à former le revêtement isolant 3 pris en sandwich entre l'enveloppe 2 et l'âme centrale 4. Il est toutefois à souligner que les composés formant la couche 3 peuvent être appliqués aussi par toute autre technique de dépôt adaptée à l'obtention d'une couche desdits composés sur l'âme centrale 4, par exemple par nébulisation ou par extrusion.
- une étape C de formage en « U » d'une bande métallique 14 ayant deux bords longitudinaux parallèles par rapprochement desdits bords l'un de l'autre, par exemple au moyen de galets de pressage ou autre, de sorte d'obtenir une conformation en gouttière.
- une étape D d'introduction de l'âme centrale 4 recouverte de la couche intermédiaire 3 au sein de la gouttière destinée à constituer l'enveloppe 2 externe.
- une étape E mise en forme de « O » de la gouttière de section en « U » remplie par le fil obtenue à l'étape D par rapprochement jusqu'au contact ou quasi-contact l'un de l'autre, des bords longitudinaux de la bande 14 de manière à obtenir un pré-fil 15 de section en « O ».
- une première étape optionnelle de soudage longitudinal des bords en contact ou quasi-contact l'un de l'autre du pré-fil 15 pour le rendre étanche, par exemple par soudage à haute fréquence, faisceau laser ou TIG.
- une étape F de réduction du diamètre du pré-fil par laminage et/ou tréfilage jusqu'à obtenir un fil de soudage selon l'invention ayant un diamètre final de moins de 10 mm, typiquement compris entre 0,8 et 5 mm.
- une seconde étape optionnelle durant laquelle un traitement superficiel final, tel un cuivrage ou un bronzage chimique, est appliqué au fil 1 de l'invention.

De manière générale, un fil de soudage 1 à âme solide selon l'invention présente notamment tout ou partie des avantages suivants par rapport aux fils pleins ou fils solides connus, lorsqu'il est utilisé en soudage à l'arc de type MIG/MAG ou à l'arc submergé :
- une concentration de courant de soudage dans la couronne externe constituant l'enveloppe externe, qui est isolée du «coeur» métallique interne du fil par la couche intermédiaire isolante de forte résistivité électrique, beaucoup plus élevée, typiquement de 200 à 600 A/mm2 , par rapport à un fil plein standard pour lequel elle n'est que de typiquement 50 à 90 A/mm2 . Ceci conduit à l'obtention d'un taux de dépôt supérieur en général de 20 à 50% environ, donc à une vitesse et une efficacité de soudage améliorées.
- une soudabilité améliorée grâce à une fusion plus douce et ce, du fait de la mise en oeuvre de tensions moindres.
- une meilleure conductivité de l'enveloppe externe, laquelle peut en outre être plus importante que celle du fil solide interne, ce qui est particulièrement intéressant pour souder certains matériaux comme l'acier inoxydable.
- un besoin en courant moindre, donc un coût en énergie inférieur.
- un apport thermique diminué permettant de limiter, voire supprimer, les déformations du matériel base et d'éviter certains problèmes connexes, comme en soudage en joint étroit, encore appelé soudage« narrow gap ».
- la possibilité d'ajouter des quantités contrôlées de certains éléments dans la couche intermédiaire permettant de modifier l'ionisation d'arc, tels des éléments ou composés à base de K ou Na, ou la métallurgie, tel les éléments Ti et B par exemple.
- la possibilité de faire varier, en fonction des besoins, la macro-chimie du joint de soudage obtenu par fusion du fil en changeant le rapport en poids et la nuance entre l'enveloppe externe et le fil solide interne.
- la possibilité de protéger le fil solide interne formant le coeur du fil de toute oxydation grâce à l'utilisation d'enveloppe externe, c'est-à-dire d'un feuillard externe, en acier inoxydable.

Le fil de soudage de l'invention est utilisable dans tout procédé de soudage à l'arc l'électrique de type MIG, MAG, ou à l'arc submergé, pour souder une (i.e. tube, pipeline, tuyau...) ou plusieurs pièces en acier, en particulier en acier choisi parmi les aciers au carbone, les aciers faiblement, moyennement ou fortement alliés, ou les aciers inoxydables.

## Revendications

1. Fil de soudage (1) comprenant
- une âme centrale (4) formée d'un fil métallique solide,
- une enveloppe métallique tubulaire externe (2) formant manchon autour dudit fil métallique solide (4) et
- une couche intermédiaire (3) compris entre l'âme centrale (4) et l'enveloppe métallique tubulaire externe (2) contenant un ou plusieurs composés,
**caractérisé en ce que** :
la couche intermédiaire (3) présente une résistivité électrique élevée comprise entre 5x10⁻⁶ et 5x10⁺¹⁸ Ωm, ladite résistivité électrique élevée de la couche intermédiaire (3) étant supérieure à la résistivité électrique faible de l'enveloppe métallique (2) tubulaire externe ; l'enveloppe métallique (2) présente une résistivité électricque comprise entre 1,6x10⁻⁸ et 0,5x10⁻⁶ Ωm ; et
le fil métallique solide constituant l'âme centrale (4) représente de 70 à 90% de la surface de la section du fil, la couche intermédiaire (3) représente de 0,0001 à 20 % de la surface de la section du fil et l'enveloppe métallique tubulaire externe (2) représente le reste de la surface de la section du fil.

2. Fil selon l'une des revendications précédentes, **caractérisé en ce que** l'enveloppe métallique tubulaire externe (2) et/ou le fil métallique solide constituant l'âme centrale (4) sont en acier.

3. Fil selon l'une des revendications précédentes, **caractérisé en ce que** le fil métallique interne constituant l'âme centrale (4) et l'enveloppe métallique tubulaire externe (2) sont en acier au carbone, en acier faiblement allié (< 5 % en masse d'éléments d'alliage) ou en acier inoxydable.

4. Fil selon l'une des revendications précédentes, **caractérisé en ce que** la couche intermédiaire (3) contient un ou plusieurs composés choisis parmi les silicates ou les sels de Na, K, Zr et Li, le rutile (TiO₂), CaF₂, les sels de fluor, le quartz, MoS₂, WS₂, le mica, le graphite, les carbonates ou oxydes métalliques de Bi, Zr, Fe et Al, les métaux et les alliages de B, Ti, Sn, Mn, Ni, Cr et Mo, et les alliages de silicium.

5. Fil selon l'une des revendications précédentes, **caractérisé en ce que** l'enveloppe métallique tubulaire externe (2) présente un traitement superficiel de type cuivrage ou bronzage.

6. Fil selon l'une des revendications précédentes, **caractérisé en ce qu'**il a un diamètre externe inférieur ou égal à 10 mm, de préférence compris entre 0,8 et 5 mm.

7. Procédé de fabrication d'un fil (1) selon l'une des revendications précédentes, **caractérisé en ce qu'** il comporte les étapes de:
a) appliquer ou déposer au moins une couche intermédiaire (3) sur la surface externe d'un fil métallique (4) de manière à obtenir un fil métallique revêtu d'une couche d'un ou plusieurs composés formant une couche intermédiaire (3) sur la surface externe dudit fil métallique (4),
b) introduire le fil métallique (4) recouvert de la couche intermédiaire (3) obtenu à l'étape a) dans une gouttière constituée d'une bande métallique (14) de section en « U » ayant deux bords longitudinaux parallèles rapprochés l'un de l'autre, et
c) rapprocher lesdits bords longitudinaux la gouttière de section en « U » remplie par le fil métallique (4) recouvert de la couche intermédiaire (3) obtenue à l'étape b), jusqu'au contact ou quasi-contact l'un de l'autre de manière à obtenir un pré-fil (15) de section en «O».

8. Procédé de fabrication selon la revendication 7, **caractérisé en ce qu'** il comporte une étape d), subséquente à l'étape c), souder l'une à l'autre les bords longitudinaux du pré-fil (15) de section en « O », de préférence par soudage à haute fréquence, faisceau laser ou TIG.

9. Procédé de fabrication selon l'une des revendications 7 ou 8, **caractérisé en ce qu'**il comporte une étape e), subséquente à l'étape c) ou à l'étape d), de réduction du diamètre du diamètre du pré-fil (15) de section en « O » pour obtenir un fil de soudage (1) de diamètre final inférieur à 10 mm, de préférence entre 0,8 et 5 mm.

10. Procédé de fabrication selon l'une des revendications 7 à 9, **caractérisé en ce qu'**à l'étape a), la couche intermédiaire (3) est déposée sur la surface externe d'un fil métallique (4) par immersion du fil métallique (4) dans la ou les composés à appliquer, par nébulisation ou par extrusion.

11. Procédé de soudage à l'arc l'électrique dans lequel on met en oeuvre un fil selon l'une des revendications précédentes, **caractérisé en ce qu'**il est un procédé de soudage MIG ou MAG, ou à l'arc submergé.

12. Procédé de soudage à l'arc l'électrique selon la revendication 11, **caractérisé en ce que** l'on soude une ou plusieurs pièces (9, 10) en acier.

## Patentansprüche

1. Schweißdraht (1) umfassend
- einen zentralen Kern (4) aus einem festen Metalldraht,
- eine äußere röhrenförmige Metallhülle (2), die einen Mantel um den massiven Metalldraht (4) bildet und
- eine Zwischenschicht (3) zwischen dem zentralen Kern (4) und der äußeren röhrenförmigen Metallhülle (2), die eine oder mehrere Verbindungen enthält,
**dadurch gekennzeichnet, dass**
die Zwischenschicht (3) einen hohen spezifischen elektrischen Widerstand zwischen 5×10⁻⁶ und 5×10⁺¹⁸ Ωm aufweist, wobei der hohe elektrische Widerstand der Zwischenschicht (3) größer ist als der niedrige elektrische Widerstand der äußeren rohrförmigen Metallhülle (2); die Metallhülle (2) einen spezifischen elektrischen Widerstand zwischen 1,6x10⁻⁸ und 0,5x10⁻⁶ Ωm aufweist; und
der feste Metalldraht, der den zentralen Kern (4) bildet, 70 bis 90% der Schnittfläche des Drahts bildet, die Zwischenschicht (3) 0,0001 bis 20% der Schnittfläche des Drahts bildet und die äußere rohrförmige Metallhülle (2) den Rest der Schnittfläche des Drahts bildet.

2. Draht nach einem der vorhergehenden Ansprüche, **dadurch gekennzeichnet, dass** die äußere rohrförmige Metallhülle (2) und/oder der feste Metalldraht, der den zentralen Kern (4) bildet, aus Stahl bestehen.

3. Draht nach einem der vorhergehenden Ansprüche, **dadurch gekennzeichnet, dass** der innere Metalldraht, der den zentralen Kern (4) bildet, und die äußere rohrförmige Metallhülle (2) aus Kohlenstoffstahl, aus niedriglegiertem Stahl (<5 Gewichts% der Legierungselemente) oder aus Edelstahl gebildet sind.

4. Draht nach einem der vorhergehenden Ansprüche, **dadurch gekennzeichnet, dass** die Zwischenschicht (3) eine oder mehrere Verbindungen enthält, die ausgewählt sind aus Silikaten oder Salzen von Na, K, Zr und Li, Rutil (TiO₂), CaF₂, Fluor-Salzen, Quarz, MoS₂, WS₂, Glimmer, Graphit, Carbonate oder Metalloxide von Bi, Zr, Fe und AI, Metalle und Legierungen von B, Ti, Sn, Mn, Ni, Cr und Mo, und Siliziumlegierungen.

5. Draht nach einem der vorhergehenden Ansprüche, **dadurch gekennzeichnet, dass** das äußere rohrförmige Metallgehäuse (2) eine Oberflächenbehandlung vom Kupferbeschichtungs- oder Bronzetyp aufweist.

6. Draht nach einem der vorhergehenden Ansprüche, **dadurch gekennzeichnet, dass** er einen Außendurchmesser von weniger als oder gleich 10 mm hat, vorzugsweise zwischen 0,8 und 5 mm.

7. Verfahren zur Herstellung eines Drahtes (1) gemäß einem der vorhergehenden Ansprüche, **gekennzeichnet durch** die Schritte:
a) Anbringen oder Auftragen mindestens einer Zwischenschicht (3) auf der Außenfläche eines Metalldrahtes (4), um einen Metalldraht zu erhalten, der mit einer Schicht aus einer oder mehreren Verbindungen beschichtet ist, die eine Zwischenschicht (3) auf der Außenfläche des Metalldrahtes (4) bilden,
b) Führen des Metalldrahts (4), der mit der in Schritt a) erhaltenen Zwischenschicht (3) bedeckt ist, in eine Rinne, die aus einem Metallstreifen (14) mit U-Profil besteht, der zwei parallele Längskanten aufweist, die einander zugewandt sind, und
c) Zusammenführen der Längskanten der mit dem Metalldraht (4), der mit der Zwischenschicht (3) bedeckt ist, gefüllten Rinne des mit dem in Schritt b) erhaltenen U-Abschnitts, bis die Längskanten einander berühren oder fast berühren, um einen Vordraht (15) mit einem "O"-Querschnitt zu erhalten.

8. Herstellungsverfahren nach Anspruch 7, **dadurch gekennzeichnet, dass** es einen Schritt d) nach dem Schritt c) umfasst, in welchem die Längskanten des Vordrahtes (15) des Abschnitts mit einem Querschnitt "O", vorzugsweise durch Hochfrequenzschweißen, Laserstrahl oder WIG vorzugsweise verschweißt werden.

9. Herstellungsverfahren nach einem der Ansprüche 7 oder 8, **gekennzeichnet dadurch, dass** es einen Schritt e) nach Schritt c) oder Schritt d) umfasst, um den Durchmesser des Vordrahtes mit "O"-Abschnitt zu verringern (15), um einen Schweißdraht (1) mit einem Enddurchmesser von weniger als 10 mm, vorzugsweise zwischen 0,8 und 5 mm, zu erhalten.

10. Herstellungsverfahren nach einem der Ansprüche 7 bis 9, **gekennzeichnet dadurch, dass** in Schritt a) die Zwischenschicht (3) auf der Außenfläche eines Metalldrahtes (4) abgeschieden wird durch Eintauchen des Metalldrahtes (4) in der oder den aufzutragenden Verbindungen, durch Zerstäubung oder durch Extrusion.

11. Lichtbogenschweißverfahren, bei dem ein Draht gemäß einem der vorhergehenden Ansprüche verwendet wird, **dadurch gekennzeichnet, dass** es sich um ein MIG- oder MAG-Schweißverfahren oder ein Unterpulverschweißen handelt.

12. Lichtbogenschweißverfahren nach Anspruch 11, **dadurch gekennzeichnet, dass** ein oder mehrere Stahlstücke (9, 10) geschweißt werden.

## Claims

1. Welding wire (1) including
- a central core (4) formed of a solid metal wire,
- an outer tubular metal cover (2) forming a sleeve around said solid metal wire (4) and
- an intermediate layer (3) between the central core (4) and the outer tubular metal cover (2) containing one or more compounds,
**characterized in that**:
the intermediate layer (3) has a high electrical resistivity of between 5x10⁻⁶ and 5x10⁺¹⁸ Ωm, said high electrical resistivity of the intermediate layer (3) being greater than the low electrical resistivity of the outer tubular metal cover (2) ; the metal cover (2) having an electrical resistivity between 1,6x10⁻⁸ et 0,5x10⁻⁶ Ωm; and
the solid metal wire constituting the central core (4) represents from 70 to 90% of the surface of the section of the wire, the intermediate layer (3) represents from 0.0001 to 20% of the surface of the section of the wire and the outer tubular metal cover (2) represents the rest of the surface of the wire section.

2. Wire according to one of the preceding claims, **characterized in that** the outer tubular metal cover (2) and/or the solid metal wire constituting the central core (4) are made of steel.

3. Wire according to one of the preceding claims, **characterized in that** the internal metal wire constituting the central core (4) and the external tubular metal cover (2) are made of carbon steel, of low alloy steel (<5% by mass of alloying elements) or stainless steel.

4. Wire according to one of the preceding claims, **characterized in that** the intermediate layer (3) contains one or more compounds chosen from silicates or salts of Na, K, Zr et Li, rutile (TiO₂), CaF₂, fluorine salts, quartz, MoS₂, WS₂, mica, graphite, carbonates or metal oxides of Bi, Zr, Fe and Al, metals and alloys of B, Ti, Sn, Mn, Ni, Cr and Mo, and silicon alloys.

5. Wire according to one of the preceding claims, **characterized in that** the outer tubular metal cover (2) has a surface treatment of the copper plating or tanning type.

6. Wire according to one of the preceding claims, **characterized in that** it has an external diameter less than or equal to 10 mm, preferably between 0.8 and 5 mm.

7. A method of manufacturing a wire (1) according to one of the preceding claims, **characterized in that** it comprises the steps of:
a) applying or depositing at least one intermediate layer (3) on the external surface of a metal wire (4) so as to obtain a metal wire coated with a layer of one or more compounds forming an intermediate layer (3) on the external surface of said metal wire (4),
b) introduce the metal wire (4) covered with the intermediate layer (3) obtained in step a) into a groove made up of a metal strip (14) of « U » section having two parallel longitudinal edges approaching each other, and
c) bringing together said longitudinal edges of the groove of « U » section filled with the metal wire (4) covered with the intermediate layer (3) obtained in step b), until one contacts or almost contacts the other so as to obtain a pre-wire (15) with an « O » section.

8. The method according to claim 7, **characterized in that** it comprises a step d), subsequent to step c), of welding together the longitudinal edges of the pre-wire (15) « O » section, preferably by high frequency, laser beam or TIG welding.

9. The method according to one of claims 7 or 8, **characterized in that** it comprises a step e), subsequent to step c) or to step d), of reducing the diameter of the prewire (15) of « O » section to obtain a welding wire (1) of final diameter less than 10 mm, preferably between 0.8 and 5 mm.

10. The method according to one of claims 7 to 9, **characterized in that** in step a), the intermediate layer (3) is deposited on the external surface of a metal wire (4) by immersion of the metal wire (4) in the compound or compounds to be applied, by nebulization or by extrusion.

11. Arc welding method in which a wire is used according to one of the preceding claims, **characterized in that** it is a MIG or MAG welding process, or a submerged arc welding process.

12. Arc welding method according to claim 11, **characterized in that** one or more pieces (9, 10) of steel are welded.
